# EUROPÄISCHE PATENTSCHRIFT

(11) **EP 0 490 396 B1**
(45) Veröffentlichungstag und Bekanntmachung des Hinweises auf die Patenterteilung: **13.03.1996**
(21) Anmeldenummer: 91121395.7
(22) Anmeldetag: 12.12.1991
(51) Int. Cl.: C02F 1/52, C02F 1/58

(54) **Verfahren zur Gewinnung der Ammoniumgehalte aus Prozess- und Abwässern**
Process for recovery of ammonia from process and waste waters
Procédé pour extraire le contenu en ammonium des eaux de fabrication et des eaux résiduaires

(30) Priorität: 14.12.1990 DE 4040067
(43) Veröffentlichungstag der Anmeldung: 17.06.1992
(73) Patentinhaber: DEUTSCHE NALCO-CHEMIE GmbH, D-60486 Frankfurt/Main (DE); A.I.R. Lippewerk Recycling GmbH, D-44536 Lünen (DE)
(72) Erfinder: Bings, Hubert, W-4570 Lünen (DE); Lehmkuhl, Josef, W-6238 Hofheim/Taunus (DE)
(74) Vertreter: Ruschke, Olaf

(56) Entgegenhaltungen:
- WO-A-84/00885
- DE-A- 3 732 896
- US-H- 283
- WASSER, LUFT UND BODEN Bd. 34, Nr. 11,2, Dezember 1990, MAINZ Seiten 46 - 48; LEHMKUHL JOSEF: 'VERFAHREN FÜR DIE AMMONIUM-ELIMINATION'
- CHEMICAL ABSTRACTS, vol. 113, no. 12, 17. September 1990, Columbus, Ohio, US; abstract no. 102750P, HUBENA, JARMILA ET AL.: 'Removal of ammonia from coking- plant wastewater by precipitation' Seite 346 ;Spalte R ;

## Beschreibung

Die Erfindung betrifft ein Verfahren zur Gewinnung der Ammoniumgehalte aus Prozeß- und Abwässern unter Fällung von Magnesiumammoniumphosphat.

Der Fällungsmechanismus zur Bildung von Magnesiumammoniumphosphat ist aus der analytischen anorganischen Chemie bekannt. In der DE-OS 37 32 896 wird hiervon Gebrauch gemacht und auch der ökologische Wert dieses Fällungsverfahrens erklärt.

Bisher wurde das Verfahren in verschiedenen Stufen durchgeführt, wobei im wesentlichen zuerst Phosphorsäure vorgelegt und anschließend Magnesiumsalze, vorzugsweise Magnesiumoxid, sowie Natronlauge zur Einstellung des pH-Wertes auf ca. 9,0 zugegeben wurden. Diese Vorgehensweise hat nicht nur verfahrenstechnische Nachteile, sondern ist auch vom chemischen Fällungsmechanismus her nicht optimal. Durch das Ansäuern mit Phosphorsäure und die spätere Anhebung des pH-Wertes werden verschiedene pH-Wert-Stufen durchlaufen, so daß sich nicht nur Magnesiumammoniumphosphat, sondern auch andere Magnesium- und Calciumsalze, insbesondere Phosphate und Carbonate, bilden können. Dadurch gibt es oft keine befriedigenden Resultate bei der Ammonium-Eliminierung. Auch die Fällungsmittelmengen und die Kosten sind relativ hoch. Nach der Stöchiometrie 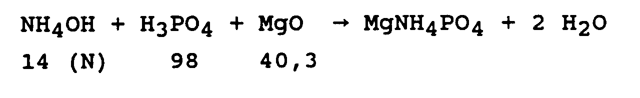
werden für 1 kg Stickstoff verbraucht
7,0 kg Phosphorsäure (ca. 1,00 DM/kg) = 7,00 DM
2,4 kg Magnesiumoxid (ca. 0,35 DM/kg) = 0,84 DM
Zusätzlich wird Natronlauge benötigt, so daß die Gesamtkosten der chemischen Ammoniumfällung bei etwa 10,-- DM pro kg NH₄-Stickstoff liegen. Der Marktwert für Düngemittel-Stickstoff beträgt aber nur etwa 1,-- DM pro kg Stickstoff. Das herkömmliche Fällungsverfahren nach DE-OS 37 32 896 konnte sich daher wegen mangelnder Wirtschaftlichkeit am Markt nicht durchsetzen.

Erschwert wird die Anwendung dieses bekannten Verfahrens ferner dadurch, daß als alkalisierendes Magnesiumsalz Magnesiumphosphat oder Magnesiumoxid, vorzugsweise Magnesiumoxid, eingesetzt wird, das bekanntlich nur sehr schwer wasserlöslich ist und somit eine lange Reaktionszeit erforderlich macht. Darüber hinaus ist die Verwendung von Magnesiumphosphat- bzw. Magnesiumoxid-Pulver bzw. dessen Slurry verfahrenstechnisch problematisch.

Überraschenderweise hat sich jedoch im Rahmen der Erfindung gezeigt, daß durch Kombination von wasserlöslichen Magnesiumsalzen, wie z.B. Magnesiumchlorid und Magnesiumsulfat, mit Magnesiumoxid eine Slurry gebildet wird, die sich beim Ansäuern mit Phosphorsäure schnell und vollständig auflöst, so daß weitestgehend ein gelöstes Magnesiumhydrogenphosphat entsteht, wobei das stöchiometrische Verhältnis von Magnesium zu Phosphor von 1,2 : 1,0 bei einem Magnesiumgehalt von mindestens 7 % der optimale Wert ist.

In Anlehnung an obengenannte DE-OS 37 32 896 wurde mit einer solchen sauren Magnesiumphosphat-Lösung (SMPL) ammoniumhaltiges Prozeßwasser im Molverhältnis NH₄ ⁺ : Mg = 1 behandelt und anschließend mit Natronlauge auf einen pH-Wert von 8,8 bis 9,2 eingestellt. Die Ammonium-Eliminierung war mit ca. 80 % jedoch unbefriedigend.

| Abwasseranalyse | NH₄ (mg/l) | pH-Wert |
|---|---|---|
| vor der Fällung | 400 | 8,2 |
| nach Zugabe von SMPL | 380 | 5,6 |
| nach Zugabe von NaOH | 290 | 9,1 |

Durch Zugabe der sauren Magnesiumphosphat-Lösung fiel der pH-Wert auf unter 6 und stieg nach Zugabe von Natronlauge stufenweise wieder auf ca. 9, wobei sich unterschiedliche Fällungsprodukte bildeten.

Der Erfindung liegt die Aufgabe zugrunde, ein Verfahren zur Gewinnung der Ammoniumgehalte aus Prozeß- und Abwässern bereitzustellen, welches das Ammonium schnell und wirksam entfernt, kostengünstig mit wesentlich geringerem Fällungsmittelverbrauch arbeitet und bessere Eliminierungsraten erbringt.

Hierzu schlägt die Erfindung das Verfahren nach Anspruch 1 mit bevorzugten Ausgestaltungen nach den Ansprüchen 2 bis 5 vor.

Überraschend wurde gefunden, daß die Magnesiumammoniumphosphatfällung hinsichtlich ihrer Kinetik wesentlich beeinflußt und optimiert werden kann, wenn eine Magnesiumphosphatverbindung als Fällungsmittel verwendet und diese gleichzeitig mit Natronlauge dem zu behandelnden Wasser zugesetzt wird, wobei man während der gesamten Fällungsstufe den pH-Wert durchgehend im Bereich von 8,5 bis 9,5 hält. Der Verbrauch an Fällungsmittel kann erheblich gesenkt werden durch dessen Regenerierung und Zurückführung in die Fällungsstufe. Als Nebenprodukt des Verfahrens wird der Ammoniumgehalt des Abwassers in einen Wertstoff umgewandelt und wiedergewonnen und z.B. durch Absorbieren in Wasser in eine technische Ammoniaklösung überführt. Aufgrund der Regenerierung des Fällungsmittels und der hohen Eliminierungsrate von mehr als 95 % wird es möglich, die Kosten pro kg NH₄-Stickstoff so weit abzusenken, daß das Verfahren ökonomisch tragbar und konkurrenzfähig wird. Quantitativ liegt der Kostenreduktionsfaktor bei etwa einer Größenordnung. Die Recyclierung des Fällungsmittels führt außerdem zu einer Verminderung des Anioneneintrags um mindestens 75 % und in der Praxis um bis zu 90 %.

Als Magnesiumphosphatverbindung kommen erfindungsgemäß verschiedene Fällungsmittel in Betracht, denen gemeinsam ist, daß sich ein feststehendes Mg-P-Verhältnis einstellt. In der Praxis werden verschiedene Magnesiumphosphatverbindungen wie Magnesiumtetrahydrogenphosphat MgH₄(PO₄)₂ . 3H₂O, Magnesiumhydrogenphosphat MgHPO₄ . 3H₂O, Trimagnesiumphosphat Mg₃(PO₄)₂ . 5H₂O oder Magnesiumdiphosphat Mg₂P₂O₇ sowie die obigen Verbindungen eingesetzt, in denen der saure Wasserstoff ganz oder teilweise durch Natrium ersetzt ist. Bevorzugt wird eine Magnesiumhydrogenphosphatlösung eingesetzt.

Das Verfahren hat den Vorteil, daß sich durch Wahl der Magnesiumphosphatverbindung ein bestimmtes Mg/P-Verhältnis einstellen läßt. Ein Verhältnis von 1,0:1 bis 1,5:1 und insbesondere von 1,2:1 ergibt günstige Fällungsbedingungen. Da das Fällungsmittel wiederverwendet und aus der Regenerierungsstufe zurückgeleitet wird, kann auch bereits ein günstiges Mg:Na:P-Verhältnis eingestellt werden und das Fällungsmittel mit voraktivierten Impfkristallen zugesetzt werden, was die Ökonomie des Verfahrens beachtlich steigert.

Im erfindungsgemäßen Verfahren sind die Fällungsbedingungen entscheidend. In einem Rührwerksbehälter wurden die saure Magnesiumhydrogenphosphat-Lösung (SMPL) und Natronlauge gleichzeitig zugegeben, wobei geeignete Dosierpumpen eingesetzt wurden. Die Pumpen waren so geschaltet, daß die Dosierrate der sauren Magnesiumphosphat-Lösung nach dem Ammoniumgehalt des Abwassers im stöchiometrischen Verhältnis NH₄ zu Magnesium = 1:1 fest eingestellt und die Dosierung der Natronlauge über eine pH-Elektrode so gesteuert wurde, daß sich konstant ein pH-Wert von 8,8 bis 9,2 einstellte. Das Resultat war überraschend. Es bildete sich sofort kristallines Magnesiumammoniumphosphat, wobei eine Ammonium-Elimination von über 95 % erreicht wurde.

| Abwasseranalyse | NH₄⁺ mg/l | pH-Wert |
|---|---|---|
| vor der Fällung | 1400 | 8,2 |
| nach gleichzeitiger Zugabe von SMP + NaOH | 35 | 9,1 |

Durch die gleichzeitige Dosierung von Fällungsmittel und Natronlauge bei Einhaltung eines konstanten pH-Wertes von bevorzugt ca. 9,0 konnte eine deutlich bessere Ammonium-Elimination erzielt werden.

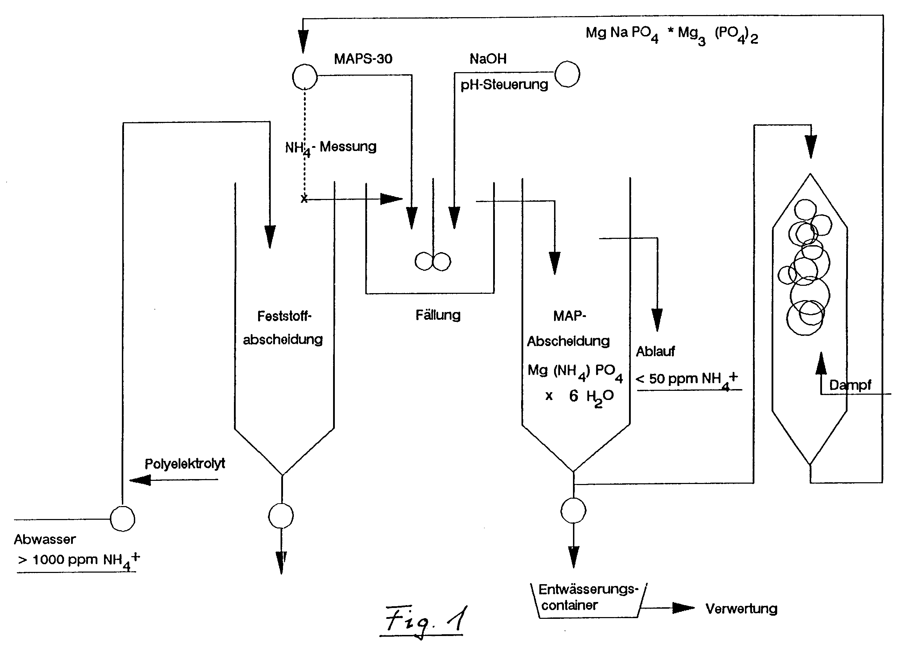

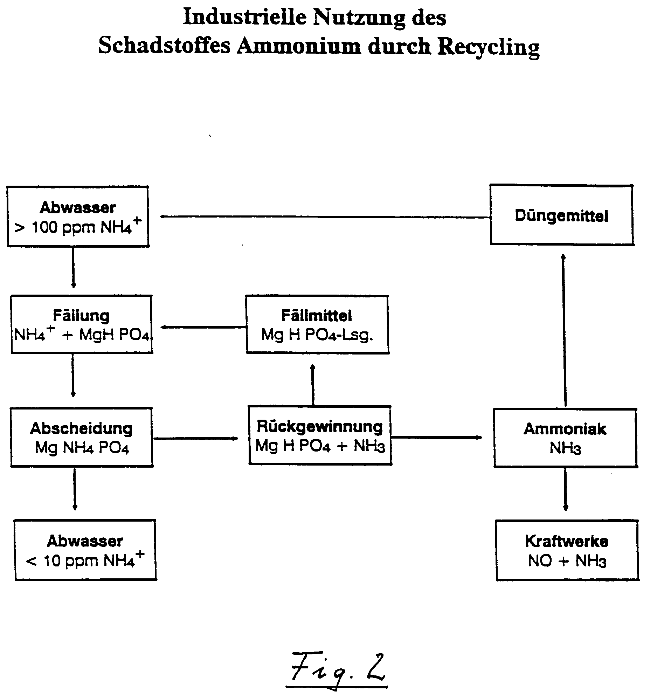

In den Zeichnungen zeigt Fig. 1 schematisch die erfindungsgemäße Ammoniumfällung im Durchlaufverfahren und Fig. 2 veranschaulicht die Überführung des Abfallstoffes Ammonium in einen Wertstoff.

### Versuch A

In einer halbtechnischen Anlage wurde der beschriebene Fällungsprozeß im Durchlaufverfahren praktiziert (Bild 1). Zuerst wurde in einem Kläraggregat das feststoffhaltige Abwasser (ammoniumhaltiges Filtrat aus der Schlammentwässerung einer Kläranlage) durch Zugabe von Polyelektrolyt und der dadurch erfolgenden Flockulation geklärt. Geeignete Polyelektrolyte sind z.B. Acrylamid-Copolymere mit kationischer oder anionischer Ladung, insbesondere in Form ihrer wäßrigen Lösungen oder in Form von Emulsionen.

Die sedimentierten Feststoffe wurden als Schlamm am Boden des Behälters abgezogen, das geklärte Abwasser gelangte in einen Reaktionsraum mit Rührwerk.

Insgesamt wurde die Anlage mit 5 m³ ammoniumhaltigem Prozeßwasser pro Stunde beaufschlagt. Das Abwasser enthielt ca. 1500 mg NH₄/l und ca. 2 g Feststoff/l.

Nach der Feststoffabscheidung wurde in einem Reaktionsraum mit Rührwerk die Fällung durchgeführt. Danach gelangte der Abwasserstrom in einen zweiten Behälter, in der die Magnesiumammoniumphosphat-Kristalle abgeschieden werden konnten. Die Magnesiumhydrogenphosphat-Lösung (mit 7,5 % Mg) wurde im stöchiometrischen Verhältnis von 1:1,1 dosiert, d.h. pro m³ Abwasser 28,5 kg Lösung.

Bezogen auf den Abwasserstrom von 5 m³/h wurden also 142,5 kg Magnesiumhydrogenphosphat-Lösung in den Einlauf des Reaktors gegeben. Gleichzeitig erfolgte die Dosierung von Natronlauge. Über eine pH-Wert-Elektrode wurde die Pumpe gesteuert, wobei ein pH-Wert von 9,0 als Sollwert vorgegeben wurde. Dabei wurden pro m³ Abwasser 8 kg NaOH (50%ig) verbraucht.

Sofort bildete sich kristallines Magnesiumammoniumphosphat, welches sehr schnell sedimentierte.

Die Analyse des Abwassers nach der Behandlung ergab einen Ammoniumwert von 20 mg NH₄/l. Dies entspricht einer Eliminationsrate von über 99 %. Auch das Fällungsprodukt wurde analysiert und hatte folgende Zusammensetzungen:

| | |
|---|---|
| Magnesium | = 9,9 % Mg |
| Ammonium | = 6,6 % NH₄⁺ |
| Phosphat | = 36,8 % PO₄³⁻ |
| Calcium | = 0,7 % Ca |
| Carbonat | = 0,2 % CO₃²⁻ |

Das Molverhältnis dieser Verbindung entspricht Mg = 1, NH₄ = 0,95, PO₄ = 0,95. Demnach hatte sich also relativ sauberes, kristallines Magnesiumammoniumphosphat.hexahydrat gebildet.

### Versuch B

Der nach Versuch A entstandene MAP-Kristallbrei wurde abgeschieden und in einem Behälter mit Natronlauge auf einen pH-Wert von 11,0 eingestellt. Anschließend wurde Luft und Dampf eingeblasen und die Temperatur bei ca. 60°C gehalten. Der Behälter hatte einen Entlüftungsstutzen, an dem ein Schlauch montiert war. Der Schlauch wurde in einem Behälter mit Wasser eingeführt. Durch die Reaktion mit Natronlauge wurde Ammoniak ausgestrippt, wobei dieser Vorgang durch die Temperaturerhöhung beschleunigt werden konnte.

Die Reaktion wurde nach 60 Minuten beendet. Zurück blieb ein alkalisches Natrium/Magnesium/Phosphat, welches entwässert, gewaschen und analysiert wurde. Es hatte folgende chemische Zusammensetzung:

| | |
|---|---|
| Magnesium | = 16,9 % Mg |
| Ammonium | = 0,8 % NH4⁺ |
| Phosphat | = 33,8 % PO₄³⁻ |
| Natrium | = 2,7 % Na |

Demnach war also eine weitgehende Entfernung des Ammoniums gelungen. Auch die Ammoniaklösung der beschriebenen Versuche B + C wurden analysiert. Der NH₃-Gehalt betrug 8,3 bzw. 10,4%.

### Versuch C

Der nach Versuch A gebildete Kristallbrei wurde wiederum abgeschieden und diesmal bei 140°C in einem geschlossenen Gefäß getrocknet. Das Gefäß hatte einen Entlüftungsstutzen, an dem ein Schlauch montiert war. Der Schlauch wurde in einen Behälter mit Wasser eingeführt. Durch die Erwärmung entwich Wasserdampf und Ammoniak, zurück blieb Magnesiumpyrophosphat als feines, bräunliches, sehr fließfähiges Pulver.

Nach 120 Minuten war die Reaktion beendet. Der pulvrige Rückstand hatte folgende chemische Zusammensetzung:

| | |
|---|---|
| Magnesium | = 19,8 % Mg |
| Ammonium | = 0,7 % NH₄⁺ |
| Phosphat | = 27,3 % P(V) |

Die Ammoniaklösung des beschriebenen Versuches C wurde analysiert und hatte einen Gehalt von 6,3 % NH₃.

### Versuch D

Das nach den Versuchen B und C gewonnene basische Natrium/Magnesium/Phosphat wurde gewaschen und in verdünnter Salzsäure bei einem pH-Wert von 4,0 gelöst. Die Lösung hatte folgende chemische Zusammensetzung:

| | |
|---|---|
| Magnesium | = 6,5 % Mg |
| Phosphat | = 22,1 % PO₄³⁻ |
| Natrium | = 11,7 % Na |
| Chlorid | = 6,3 % Cl |

In Anlehung an Versuch A wurde mit dieser Lösung ammoniumhaltiges Abwasser wiederum gemeinsam mit Natronlauge bei einem pH-Wert von ca. 9,0 behandelt. Auch hier bildete sich sofort kristallines Magnesiumammoniumphosphat. Die Analyse des Abwassers ergab nach der Behandlung einen Ammoniumwert von 25 mg NH₄/l, auch dies entspricht einer Eliminationsrate von über 99 %.

Die Versuche A - D konnten verdeutlichen, daß eine weitgehende quantitative Fällung von Ammonium nach dem beschriebenen Verfahren möglich ist.

Weiterhin konnten Wege der Verwertung des Fällungsproduktes aufgezeigt werden, wobei einerseits Ammoniak gewonnen werden kann, andererseits die Mg-P-Komponente recycliert werden kann, wie Fig. 2 nochmals dokumentiert.

## Patentansprüche

1. Verfahren zur Entfernung und Gewinnung der Ammoniumgehalte aus Prozeß- und Abwässern durch Fällung von Magnesiumammoniumphosphat (MgNH₄PO₄.6H₂O) bei einem pH-Wert im Bereich von 7 bis 10, dadurch **gekennzeichnet,** daß
in einer Stufe (a) die Magnesiumammoniumphosphat-Fällung bei einem konstanten pH-Wert in dem Bereich von 8,5 bis 9,5 und bei einem Magnesium/Phosphor-Molverhältnis von 1,0:1 bis 1,5:1 unter gleichzeitiger Verwendung von Magnesiumhydrogenphosphat in Form einer wäßrigen Lösung und von Natronlauge als Fällungsmittel durchgeführt wird und
in einer Stufe (b) zur Regenerierung des Fällungsmittels aus dem in der Stufe (a) gebildeten Magnesiumammoniumphosphat-Niederschlag, dieser als 2 bis 20 %ige Suspension nach der Zugabe von Natronlauge bei einer Temperatur oberhalb 50°C mit Heißluft oder Wasserdampf unter Ammoniak-Entfernung gestrippt und der dabei erhaltene feste Rückstand direkt in die Fällungsstufe (a) zurückgeführt wird.

2. Verfahren nach Anspruch 1, dadurch gekennzeichnet, daß der pH-Wert in der Fällungsstufe (a) in dem Bereich von 8,7 bis 9,2 gehalten wird.

3. Verfahren nach Anspruch 1 oder 2, dadurch gekennzeichnet, daß in der Fällungsstufe (a) das Magnesium/Phosphor-Molverhältnis bei 1,2:1 gehalten wird.

4. Verfahren nach einem der Ansprüche 1 bis 3, dadurch gekennzeichnet, der Magnesiumammoniumphosphat-Niederschlag aus der Fällungsstufe (a) als 2 bis 20 %ige Suspension bei Temperaturen oberhalb 80°C gestrippt wird.

5. Verfahren nach einem der Ansprüche 1 bis 4, dadurch gekennzeichnet, daß die Regenerierungssstufe (b) unter Vakuum durchgeführt wird.

## Claims

1. A process for separating and recovering the ammonium contents from process and sewage waters by precipitating magnesium ammonium phosphate (MgNH₄PO₄.6H₂O) at a pH in the range of from 7 to 10, **characterized** in that
in a step (a) magnesium ammonium phosphate precipitation is carried out at a constant pH in the range of from 8.5 to 9.5 and at a magnesium:phosphorus mol ratio of from 1.0:1 to 1.5:1 using simultaneously magnesium hydrogen phosphate in the form of an aqueous solution and sodium hydroxide as precipitation agent; and
in a step (b), for regenerating the precipitation agent from the magnesium ammonium phosphate precipitate formed in step (a), this precipitate in the form of a 2 to 20 % suspension and after the addition of sodium hydroxide is stripped at a temperatur of above 50°C with hot air or steam while ammonia is separated and the thus obtained solid residue is recycled directly into the precipitation step (a).

2. The process according to claim 1, characterized in that the pH in the precipitation step (a) is maintained in the range of from 8.7 to 9.2.

3. The process according to claim 1 or 2, characterized in that in precipitation step (a) the magnesium:phosphorus mol ratio is maintained at 1.2:1.

4. The process according to any of claims 1 to 3, characterized in that the magnesium ammonium phosphate precipitate from precipitation step (a) is stripped in the form of a 2 to 20 % suspension at temperatures of above 80°C.

5. The process according to any of claims 1 to 4, characterized in that the regeneration step (b) is carried out under vacuum.

## Revendications

1. Procédé pour l'élimination et la récupération des contenus en ammonium des eaux de processus et des eaux usées par précipitation de phosphate de magnésium-ammonium (MgNH₄PO₄·6H₂O) à un pH dans la gamme entre 7 et 10, caractérisé en ce que
dans une étape (a), la précipitation de phosphate de magnésium-ammonium est effectuée à une valeur constante du pH dans la gamme entre 8,5 et 9,5, et avec un rapport molaire de magnésium/phosphore de 1,0:1 jusqu'à 1,5:1, en utilisant simultanément de l'hydrogénophosphate de magnésium sous forme d'une solution aqueuse et de la soude caustique en tant qu'agents de précipitation, et
dans une étape (b) pour la régénération de l'agent de précipitation du précipité de phosphate de magnésium-ammonium formé dans l'étape (a), ce précipité est stripé sous forme d'une suspension de 2 à 20% après addition de soude caustique à une température au-dessus de 50°C avec de l'air chaud ou de la vapeur d'eau avec élimination de l'ammoniac et le résidu solide ainsi obtenu est directement récyclé dans l'étape de précipitation (a).

2. Procédé selon la revendication 1, caractérisé en ce que dans l'étape de précipitation (a), le pH est maintenu dans la gamme de 8,7 à 9,2.

3. Procédé selon la revendication 1 ou 2, caractérisé en ce que dans l'étape de précipitation (a), le rapport molaire de magnésium/phosphore est maintenu à 1,2:1.

4. Procédé selon l'une des revendications 1 à 3, caractérisé en ce que le précipité de phosphate de magnésium-ammonium est stripé de l'étape de précipitation (a) sous forme d'une suspension de 2 à 20% à des températures au-dessus de 80°C.

5. Procédé selon l'une des revendications 1 à 4, caractérisé en ce que l'étape de régénération (b) est effectué sous vide.
